**Europäisches Patentamt**

**European Patent Office**

**Office européen des brevets**

(19)

(11) Veröffentlichungsnummer: **0 045 004**
**A1**

(12) ## EUROPÄISCHE PATENTANMELDUNG

(21) Anmeldenummer: **81105510.2**

(22) Anmeldetag: **14.07.81**

(51) Int. Cl.³: **G 02 B 25/04**, G 02 B 17/02

(30) Priorität: **24.07.80 DE 3028032**

(43) Veröffentlichungstag der Anmeldung: **03.02.82**
**Patentblatt 82/5**

(84) Benannte Vertragsstaaten: **CH FR GB IT LI NL**

(71) Anmelder: **Spindler & Hoyer GmbH & Co.,
Königsallee 23, D-3400 Göttingen (DE)**

(72) Erfinder: **Holzinger, Fritz, Brahmwaldstrasse 14,
D-3400 Göttingen (DE)**

(74) Vertreter: **Patentanwälte Dipl.-Ing. Rudolf Bibrach
Dipl.-Ing. Elmar Rehberg, Bibrach und Rehberg
Postfach 7 38, D-3400 Göttingen (DE)**

(54) **Hochvergrössernde Lupe, insbes. zur Betrachtung von Mikrofilm.**

(57) Die hochvergrößernde Lupe dient insbesondere zur Betrachtung von Mikrofilm. Sie besitzt einen halbdurchlässigen Spiegel (2), der in einem Winkel von 45° zur Bildachse (3) angeordnet ist. Ein Hohlspiegel (5) schließt sich mit seiner Kante eng an die benachbarte Kante des halbdurchlässigen Spiegels (2) an. Seine Sehne schließt mit der Ebene des halbdurchlässigen Spiegels (2) einen Winkel von 45° ein.

Um größere Vergrößerungen zuzulassen und den Anwendungsbereich insofern zu verbreitern, als Eintritts- und Austrittsfläche für den Strahlengang nicht mehr in Schräglage oder in einem Winkel von 90° zueinander stehen, wird ein Vollspiegel (6) in einem Winkel von 90 bzw. 45° zu dem halbdurchlässigen Spiegel (2) derart angeordnet, daß die Bildachse (8) und die Objektachse (3) parallel bzw. fluchtend zueinander angeordnet sind.

Hochvergrößernde Lupe, insbesondere zur Betrachtung von
Mikrofilm

Die Erfindung betrifft eine hochvergrößernde Lupe des im
Oberbegriff des Anspruches 1 angegebenen Art.

Eine derartige hochvergrößernde Lupe ist als monokulares
oder binokulares Bauteil aus der US-PS 2 883 908 bekannt.
Sie dient insbesondere zur Betrachtung durchsichtiger oder
durchscheinender Bilder bzw. Filmstücke. In einem Gehäuse
sind die genannten optischen Elemente in der angegebenen
Weise angeordnet. Durch ein Beleuchtungssystem kann gleichzeitig Licht in die Lupe eingespiegelt werden. Mit dieser
Lupe wird ein vergrößertes virtuelles Bild des zu betrachtenden Gegenstandes erzeugt. Objektachse und Bildachse
stehen aufeinander senkrecht, so daß die Betrachtung eines
ausgedehnten Objektes nur bedingt möglich ist.

Eine grundsätzlich etwas anders aufgebaute hochvergrößernde
Lupe ist aus der DE-PS 23 17 589 bzw. der US-PS 3 758 196
bekannt. Auch dabei findet ein Hohlspiegel und ein halbdurchlässiger Spiegel Verwendung. Es ist eine Eintrittsfläche und eine Austrittsfläche vorgesehen, die zueinander
in einem spitzen Winkel stehen, so daß die Beobachtung des
zu betrachtenden Gegenstandes weder fluchtend noch in einem
Winkel von 90° erfolgt, sondern in einer bestimmten Schräglage. Die Eintrittsfläche ist aufgrund der Schräglage etwa
halb so groß wie die Austrittsfläche. Der Winkel zwischen
der Normalen des halbdurchlässigen Spiegels und der Bildachse liegt dann, wenn ein besonders großer Beobachtungsraum
geschaffen werden soll, zwischen 30 und 45°. Bei 45° wird ein
Grenzfall erreicht, wo die Reflektionsbedingungen eine weitere
Verbreiterung des Gegenstandes verbieten. Die beschriebene

- 2 -

Schrägdurchsicht wird manchmal als unangenehm empfunden, insbesondere bei der Betrachtung von Mikrofilmen. Bei anderen Anwendungen kann eine gerade Durchsicht, die aber bei dieser bekannten Lupe nicht erreichbar ist, wesentlich sein. Der Vorteil der bekannten Lupe besteht darin, daß sie ein seiten- und höhenrichtiges Bild des zu betrachtenden Gegenstandes liefert, bedingt durch die geometrische Anordnung. Der Hohlspiegel wirkt als vergrößerndes Element, welches keine Umkehrung bewirkt. Der beschriebene Schrägdurchblick wird insbesondere von Brillenträgern als unangenehm empfunden, bei dem es nicht möglich ist, eine sehr kurze Entfernung zwischen dem Auge und der Austrittsfläche einzunehmen. Die Eintrittsfläche ist infolge der geometrischen Anordnung etwa halb so groß wie die Austrittsfläche. Dadurch sind der Vergrößerung Grenzen gesetzt. Eine größere Vergrößerung könnte nur dadurch erreicht werden, daß die Lupe verkleinert wird, wobei die Krümmung des Hohlspiegels verkleinert werden müßte. Hier sind auch Grenzen gesetzt, denn ein Hohlspiegel mit kleinerem Radius schneidet von der Eintrittsfläche einen Flächenanteil weg, so daß die Eintrittsfläche selbst wieder kleiner wird. Versetzt man die Eintrittsfläche parallel zu sich selbst zurück, dann wird von der Fläche des Hohlspiegels eine entsprechende Teilfläche weggeschnitten, die für die volle Ausbildung dann nicht zur Verfügung steht.

Die aus der DE-PS 24 34 436 bekannte hochvergrößernde Lupe arbeitet mit einem um 90° abgelenkten Strahlengang, bei dem also die Eintritts- und die Austrittsfläche bzw. die Bildachse und die Objektachse in einem Winkel von 90° zueinander angeordnet sind. Eintrittsfläche und Austrittsfläche sind gleichgroß. Außerdem findet auch hier ein Hohlspiegel als vergrößerndes Element sowie ein halbdurchlässiger Spiegel Verwendung. Diese Lupe löst bereits die Aufgabe, eine vergleichsweise größere Vergrößerung zuzulassen, jedoch ist die Anordnung nur für bestimmte Anwendungsfälle sinnvoll, beispielsweise bei der Betrachtung eines Schmalfilmes. Für die Betrachtung eines Mikrofilmes ist die 90°-Anordnung nicht geeignet, da die Mikrofilmkarte hier selbst dem Betrachter störend im Wege stehen würde. Die bekannte Lupe liefert ein seiten- und höhenrichtiges Bild.

Der Erfindung liegt die Aufgabe zugrunde, eine Lupe der eingangs beschriebenen Art so weiterzubilden, daß sie größere Vergrößerungen zuläßt und eine Anordnung von Eintritts- und Austrittsfläche in Schräglage oder in einem Winkel von 90° zueinander vermeidet, damit der Anwendungsbereich breiter wird.

Erfindungsgemäß wird dies dadurch erreicht, daß ein Vollspiegel in einem Winkel von 90° bzw. 45° zu dem halbdurchlässigen Spiegel derart vorgesehen ist, daß die Bildachse und die Objektachse parallel bzw. fluchtend zueinander angeordnet sind. Damit ergibt sich der Vorteil eines parallelen bzw. fluchtenden Durchblickes durch die Lupe, so daß sich Objekt und Betrachter nicht stören können. Sofern der Vollspiegel als ebener Vollspiegel ausgebildet ist, entsteht zwar entweder ein seitenverkehrtes oder ein höhenverkehrtes Bild. Dies ist aber keineswegs beim Betrachten von Mikrofilm störend, es bedingt nur, daß der Mikrofilm in entsprechender Relativlage an der Eintrittsfläche angeordnet wird. Es können auch größere Vergrößerungen gewählt werden als bisher bei den bekannten Lupen möglich. Die Veränderung des Radiusses des Hohlspiegels wirkt sich nicht in einer Verkleinerung der Eintrittsfläche aus. Die hochvergrößernde Lupe kann nicht nur mit besonderem Vorteil beim Betrachten von Mikrofilmen eingesetzt werden, sondern auch im Fernrohrbau, wobei bei einer Anordnung des Vollspiegels in einem Winkel von 90°

- 4 -

zu dem halbdurchlässigen Spiegel die hochvergrößernde Lupe
zugleich die Funktion des Okulars und des Umkehrsystems übernimmt, so daß beispielsweise die gesonderte Anordnung eines
Prismenumkehrsystems entbehrlich wird. Wird dagegen der halbdurchlässige Spiegel und der Vollspiegel in einem gegenseitigen Winkel von 45° angeordnet, so wird der halbdurchlässige
Spiegel zweifach benutzt. Es ergibt sich als Vorteil nicht nur
ein paralleler sondern ein fluchtender Durchblick, allerdings
verbunden mit einem entsprechenden Abfall der Lichtstärke. Da
bei diesem Fall auch ein seitenrichtiges und ein höhenrichtiges
Bild entsteht, ist diese Lupe als Okular für ein Fernrohr
weniger geeignet.

Der Raum zwischen der Eintrittsfläche und dem halbdurchlässigen Spiegel kann durch ein erstes Prisma und der Raum zwischen
dem halbdurchlässigen Spiegel und dem Vollspiegel durch ein
zweites Prisma aus lichtbrechendem Material ausgefüllt sein,
wobei das zweite Prisma eine senkrecht zur Bildachse angeordnete Austrittsfläche aufweist, während das erste Prisma die
senkrecht zur Objektachse angeordnete Eintrittsfläche besitzt.
Die beiden Prismen sind zweckmäßig miteinander verkittet und
bilden an dieser Stelle den halbdurchlässigen Spiegel, so daß
die Anordnung eines besonderen Gehäuses zur Anordnung und
Fixierung der genannten optischen Geräte entbehrlich wird.

Mit besonderem Vorteil kann der Vollspiegel als Dachkantprisma
ausgebildet sein, also als zwei im Winkel von 90° zueinander
stehenden Flächen an dem zweiten Prisma. Damit ergibt die Lupe
ein seiten- und höhenrichtiges virtuelles Bild.

Der Hohlspiegel ist aus herstellungstechnischen Gründen vorteilhaft eine Plan-Konvexlinse, die mit ihrer Planfläche auf eine
ebene Fläche des ersten oder des zweiten Prismas aufgesetzt ist und deren Konvexfläche verspiegelt ist. Selbstverständlich
ist es aber auch möglich, die konvexe Form des Hohlspiegels
an den Glaskörper des ersten oder zweiten Prismas direkt
anzuarbeiten.

Es kann eine zweite Eintrittsfläche für Lift einer zusätzlichen Beleuchtungsquelle vorgesehen sein. Günstige Verhältnisse ergeben sich insbesondere dann, wenn der Hohlspiegel
im Bereich des zweiten Prismas angeordnet ist. Der Hohlspiegel
selbst kann als asphärische Fläche ausgebildet sein, um auf
diese Weise Bildfehler des Hohlspiegels zu korrigieren.

Ausführungsbeispiele der Erfindung sind in der Zeichnung dargestellt und werden im folgenden näher beschrieben. Es zeigen:

Fig. 1    eine erste Anordnung der optischen Einzelteile
          der hochvergrößernden Lupe,

Fig. 2    eine zweite Anordnungsmöglichkeit der optischen
          Einzelteile der hochvergrößernden Lupe,

Fig. 3    eine erste Ausbildungsmöglichkeit der hochvergrößernden Lupe als prismatischer Körper,

Fig. 4    eine zweite Ausbildungsmöglichkeit der hochvergrößernden Lupe als prismatischer Körper,

Fig. 5    eine dritte Ausbildungsmöglichkeit der hochvergrößernden Lupe als prismatischer Körper,

Fig. 6    eine weitere Ausführungsform der hochvergrößernden
          Lupe        und

Fig. 7    eine weitere Ausführungsform der hochvergrößernden
          Lupe.

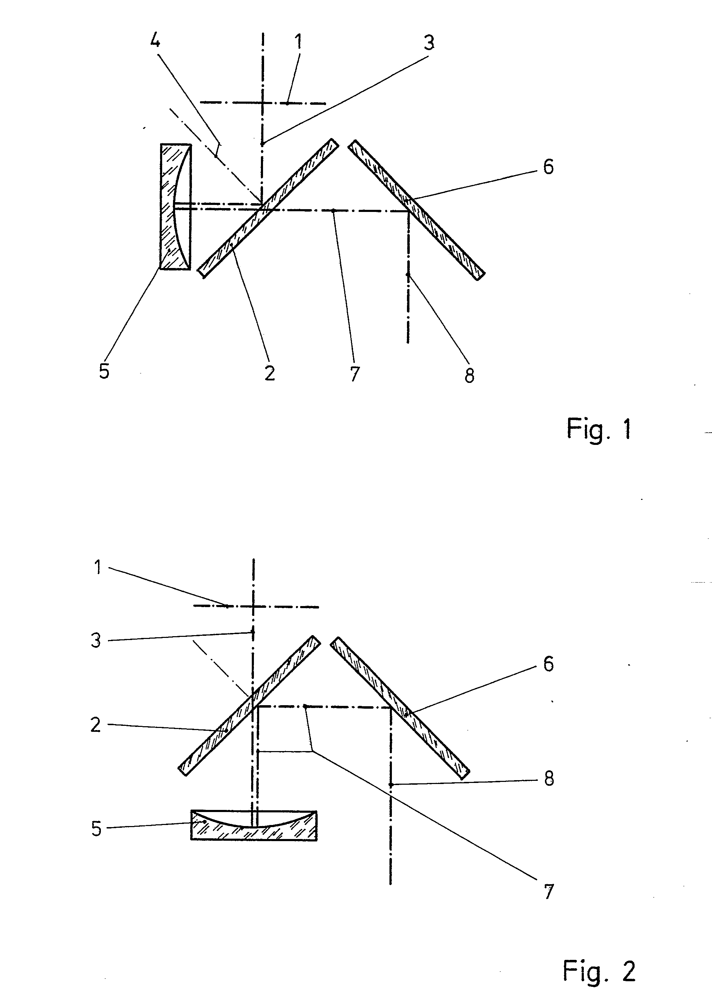

Fig. 1 zeigt das zu betrachtende Objekt 1, also beispielsweise den Mikrofilm in seiner relativen Anordnung zu den übrigen optischen Teilen. Das Objekt 1 ist so angeordnet, daß es einen Winkel von 45° zu einem halbdurchlässigen Spiegel 2 bildet. Die Objektachse 3 steht also in einem Winkel von 45° zu der Normalen 4 des halbdurchlässigen Spiegels 2. Ebenfalls in einem Winkel von 45° zu der Ebene des halbdurchlässigen Spiegels 2 ist ein Hohlspiegel 5 in der aus Fig. 1 ersichtlichen Weise angeordnet, wobei also der Brennpunkt des Hohlspiegels 5 dem teildurchlässigen Spiegel 2 zugekehrt ist. In einem Winkel von 90° zu der Ebene des teildurchlässigen Spiegels 2 ist ein ebener Vollspiegel 6 in der dargestellten Weise angeordnet. Die optische Achse 7 des Hohlspiegels und die dem Betrachter zugekehrte Bildachse 8 bilden somit ebenfalls einen Winkel von 90°, so daß schließlich Bildachse 8 und Objektachse 3 zueinander parallel verlaufen. Das Auge des Betrachters sieht in der Richtung der Bildachse 8 ein virtuelles vergrößertes Bild des Objektes 1.

Bei der Anordnung gemäß Fig. 2 ist der Hohlspiegel 5 in der geraden Fortsetzung der Objektachse 3 durch den halbdurchlässigen Spiegel 2 hindurch angeordnet. Die Ausführungsformen nach Fig. 1 und 2 zeigen im wesentlichen übereinstimmende Eigenschaften.

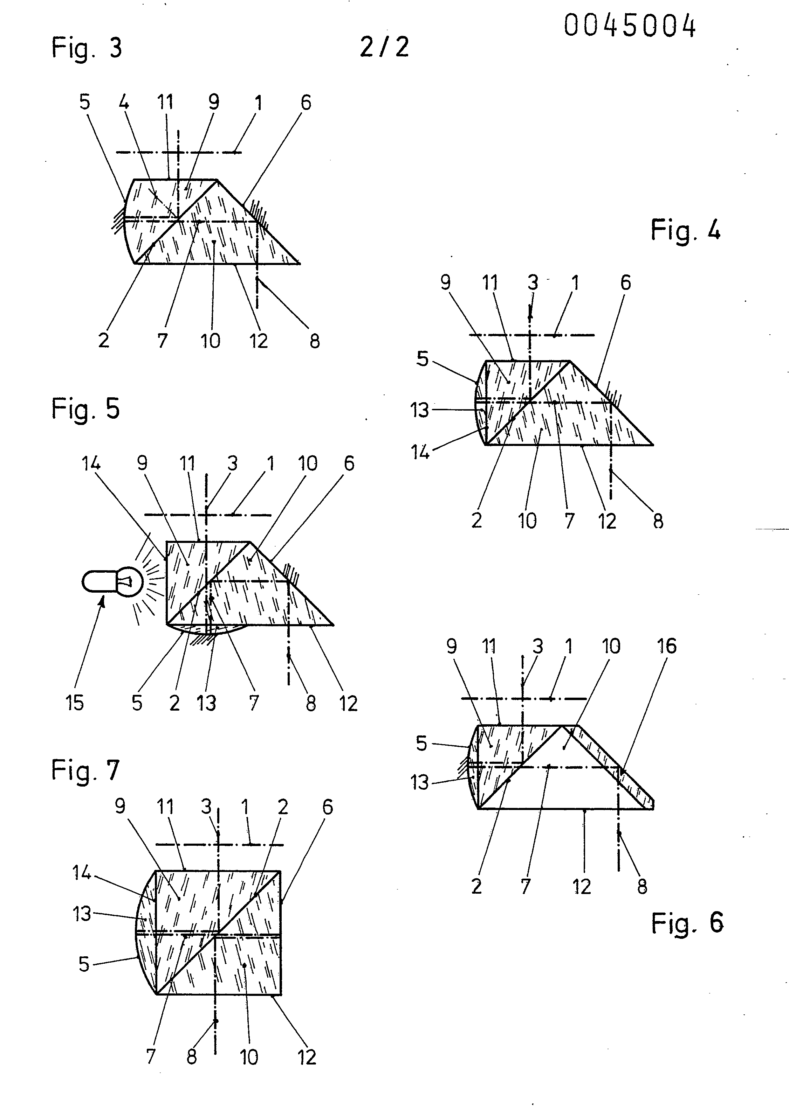

Bei den Ausführungsformen beginnend mit Fig. 3 ist der Raum zwischen dem Objekt 1 und dem halbdurchlässigen Spiegel 2 durch ein erstes Prisma 9 aus lichtbrechendem Material gefüllt. Entsprechend ist der Raum zwischen dem halbdurchlässigen Spiegel 2 und dem Vollspiegel 6 durch ein zweites Prisma 10 aus lichtbrechendem Material gefüllt. An dem Prisma 9 ist die Eintrittsfläche 11 senkrecht zur Objektachse 3 verwirklicht, während an dem zweiten Prisma 10 die Austrittsfläche 12 vorgesehen ist. Die Eintrittsfläche 11 und die Aus-

- 7 -

trittsfläche 12 sind parallel zueinander und in ihrer Größe
grundsätzlich nicht beschränkt. Der Hohlspiegel 5 ist hier
an das erste Prisma 9 als konvexe Fläche angearbeitet und
entsprechend verspiegelt. Der Vollspiegel 6 stellt eine
ebene Fläche dar, die ebenfalls verspiegelt ist. Die Verkittungsebene zwischen den beiden Prismen 9 und 10 bilden
den teildurchlässigen Spiegel 2.

Fig. 4 zeigt eine ganz ähnliche Ausführungsform. Lediglich
der Hohlspiegel 5 ist hier Bestandteil einer Plan-Konvex-
Linse 13, die an eine senkrecht zu der Eintrittsfläche 11 angeordnete Fläche 14 des ersten Prismas 9 angekittet ist.
Diese Ausführungsform besitzt gegenüber derjenigen nach Fig. 3
eine vergleichsweise einfachere Herstellung.

Bei der Ausführungsform gemäß Fig. 5 ist die Plan-Konvexlinse
13 an der dargestellten Stelle an die Austrittsfläche 12 des
zweiten Prismas 10 angekittet, so daß die Fläche 14 frei verfügbar wird, um hier mit Hilfe der Beleuchtungseinrichtung 15
Licht über den halbdurchlässigen Spiegel 2 auf die Eintrittsfläche 11 bzw. das Objekt 1 in der Eintrittsfläche 11 einzuspiegeln.

Die Ausführungsform gemäß Fig. 6 baut auf derjenigen gemäß
Fig. 4 auf. Lediglich der ebene Vollspiegel 6 ist hier als
Dachkantprisma 16 ausgebildet und angeordnet. Ein solches
Dachkantprisma besteht bekannterweise aus zwei im Winkel
von 90° zueinander angeordneten Flächen, die eine entsprechende Seiten- oder Höhenumkehr des Bildes bewirken. Das Dachkantprisma 16 ist Bestandteil bzw. besitzt die angearbeiteten
Flächen an das zweite Prisma 10. Selbstverständlich kann das
Dachkantprisma 16 auch bei den Ausführungsformen der Fig. 3
und 5 angewendet werden.

Bei der Ausführungsform gemäß Fig. 7 ist das zweite Prisma 10´ etwas anders ausgebildet. Der Vollspiegel 6´ ist hier in einem Winkel von 45° zur Ebene des halbdurchlässigen Spiegels 2 angeordnet. Der halbdurchlässige Spiegel 2 wird damit im Strahlengang zweimal benutzt. Diese Ausführungsform hat den Vorteil, daß ein höhen- und seitenrichtiges virtuelles Bild entsteht und daß sich nicht nur ein paralleler, sondern ein fluchtender Durchblick ergibt. Somit fluchten die Objektachse 3 und die Bildachse 8. Mit dieser Ausführungsform ist jedoch der Nachteil verbunden, daß die Lichtstärke beeinträchtigt wird. Infolge dieses Nachteils und der Vermeidung einer Umkehrung ist diese Ausführungsform der hochvergrößernden Lupe für den Bau eines Fernrohres weniger geeignet, da hier zusätzlich ein Umkehrsystem benötigt würde.

# BIBRACH & REHBERG    0045004

## ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPÈENS

TELEFON: (0551) 45034/35

TELEX: 96616 bipat d

POSTSCHECKKONTO: HANNOVER
(BLZ 25010030) NR. 115763-301

BANKKONTEN:    DEUTSCHE BANK AG GÖTTINGEN
(BLZ 26070072) NR. 01/85900
COMMERZBANK GÖTTINGEN
(BLZ 26040030) NR. 6425722

| IHR ZEICHEN YOUR REF. VOTRE REF. | IHR SCHREIBEN VOM YOUR LETTER VOTRE LETTRE | UNSER ZEICHEN OUR REF. NOTRE REF. | D-3400 GÖTTINGEN, PÜTTERWEG 6 |
|---|---|---|---|
| | | 10.479a/n5 | 25.6.1981 |

Spindler & Hoyer GmbH & Co., Königsallee 23, 3400 Göttingen

Hochvergrößernde Lupe, insbesondere zur Betrachtung von
Mikrofilm

P a t e n t a n s p r ü c h e :

1. Hochvergrößernde Lupe, insbesondere zur Betrachtung von
Mikrofilm, mit einem halbdurchlässigen Spiegel, der in einem
Winkel von 45° zur Bildachse angeordnet ist, einem Hohlspiegel, dessen Kante sich eng an die benachbarte Kante des
halbdurchlässigen Spiegels anschließt und dessen Sehne mit
der Ebene des halbdurchlässigen Spiegels einen Winkel von
45° einschließt, sowie einer dem Objekt zugekehrten auf der
Objektachse senkrechten Eintrittsfläche, die von der dem
Hohlspiegel abgekehrten Kante des halbdurchlässigen Spiegels
ausgeht und mit dem halbdurchlässigen Spiegel einen Winkel
von 45° einschließt, dadurch gekennzeichnet, daß ein Vollspiegel (6; 16; 6´) in einem Winkel von 90° bzw. 45° zu dem halbdurchlässigen Spiegel (2) derart vorgesehen ist, daß die Bildachse (8) und die Objektachse (3) parallel bzw. fluchtend zueinander angeordnet sind.

2. Lupe nach Anspruch 1, dadurch gekennzeichnet, daß der Raum zwischen der Eintrittsfläche (11) und dem halbdurchlässigen Spiegel (2) durch ein erstes Prisma (9) und der Raum zwischen dem halbdurchlässigen Spiegel (2) und dem Vollspiegel (6; 16; 6´) durch ein zweites Prisma (10, 10´) aus lichtbrechendem Material ausgefüllt ist und das zweite Prisma (10, 10´) eine senkrecht zur Bildachse (8) angeordnete Austrittsfläche (12) aufweist.

3. Lupe nach Anspruch 1 und 2, dadurch gekennzeichnet, daß die beiden Prismen (9, 10 bzw. 9, 10´) miteinander verkittet sind und dort den halbdurchlässigen Spiegel (2) bilden.

4. Lupe nach Anspruch 1 bis 3, dadurch gekennzeichnet, daß der Vollspiegel als Dachkantprisma (16) ausgebildet ist.

5. Lupe nach einem oder mehreren der Ansprüche 1 bis 4, dadurch gekennzeichnet, daß der Hohlspiegel (5) eine Plan-Konvexlinse (13) ist, die mit ihrer Planfläche auf eine ebene Fläche (14) des ersten oder zweiten Prismas (9, 10; 9, 10´) aufgesetzt ist und deren Konvexfläche verspiegelt ist.

6. Lupe nach einem oder mehreren der Ansprüche 1 bis 5, dadurch gekennzeichnet, daß eine zweite Eintrittsfläche (14) für Licht einer zusätzlichen Beleuchtungseinrichtung (15) vorgesehen ist.

7. Lupe nach einem oder mehreren der Ansprüche 1 bis 6, dadurch gekennzeichnet, daß der Hohlspiegel ( 5) als asphärische Fläche ausgebildet ist.

Fig. 1

Fig. 2

Fig. 3

Fig. 4

Fig. 5

Fig. 7

Fig. 6

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D | DE – C3 – 2 434 436 (H. WEISS) <br> * Anspruch 1 * <br> –– | 1 | G 02 B 25/04 <br> G 02 B 17/02 |
| | DE – A1 – 2 607 608 (ELTRO GMBH) <br> * Seite 6, unten * <br> – | 1 | |
| | DE – B2 – 2 325 135 (FIDELITY INSTRU-MENT CO. LTD.) <br> * Spalte 5, Zeile 4 * <br> –– | 7 | **RECHERCHIERTE SACHGEBIETE (Int. Cl.³)** |
| D,A | DE – C3 – 2 317 589 (H. WEISS) <br> * ganzes Dokument * <br> –––– | | G 02 B 17/02 <br> G 02 B 17/06 <br> G 02 B 25/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 20-10-1981 | FUCHS |